# EUROPEAN PATENT APPLICATION

(11) **EP 1 873 731 A1**
(43) Date of publication of application: **02.01.2008**
(21) Application number: 07737510.3
(22) Date of filing: 28.02.2007
(51) Int. Cl.: G07G 1/00, G06K 17/00

(54) **MERCHANDISE SELLING DATA PROCESSING DEVICE**

(30) Priority: 28.02.2006 JP 2006053015
(71) Applicant: Toshiba TEC Kabushiki Kaisha, Tokyo 141-8664 (JP)
(72) Inventor: IIDA, Yuji Toshiba Tec Kabushiki Kaisha, IPD, Shinagawa-ku, Tokyo 141-8664 (JP)
(74) Representative: Kramer - Barske - Schmidtchen
(86) International application number: PCT/JP2007/053782
(87) International publication number: WO 2007/100005

(57) **Abstract**

In the case where the same data as electronic tag data read by an electronic tag reader (2) is not stored in an electronic tag data memory (42), an article sales data processing apparatus (1) adds the read electronic tag data to the electronic tag data memory (42). Article sales data is acquired based on the electronic tag data added to the electronic tag data memory (42) and is added to an article item buffer (41). When a stop instruction of read operation of the electronic tag reader is issued, the read operation of the electronic tag reader (2) is stopped. When an instruction of termination of one transaction is issued, termination processing of the one transaction is performed based on article sales data stored in the article item buffer (41) on the condition that the stop instruction of the read operation of the electronic tag reader (2) has been issued.

## Description

### Technical Field

The present invention relates to an article sales data processing apparatus which performs short-range communication using electromagnetic waves with an electronic tag attached to each article to read data from a memory of each electronic tag in a non-contact manner and, based on the data read from each electronic tag, processes sales data of each article sold in one transaction.

### Background Art

Today, in the retail industry who sells articles at retail to consumers, a checkout system using an electronic tag is developed. In this system, an electronic tag is attached to articles processed at a checkout counter in sales unit.

The electronic tag is a device including a pair of an antenna and an integrated circuit (IC) chip (packaged semiconductor integrated circuit) and formed into a tag or label. The IC chip of the electronic tag is composed of a controller and a memory. In the memory of the electronic tag, an identification (ID) code assigned for identifying each tag itself is recorded.

Further, in the memory of the electronic tag attached to each article, an article code for identifying the type of each article to which the electronic tag is attached is stored. The electronic tag storing the article code in its memory is sometimes referred to as "article tag".

The electronic tag data such as the ID code and article code stored in the memory of the electronic tag is processed in an article sales data processing apparatus such as a point-of-sales (POS) terminal. The article sales data processing apparatus is provided with an electronic tag reader for reading the electronic tag data from the electronic tag. Data communication using electromagnetic waves is performed between the electronic tag reader and electronic tag. The antenna of the electronic tag reader is provided on a checkout counter on which articles to be bought by a customer are placed.

When a customer places articles on the checkout counter, electronic tag data is read from the electronic tag attached to each article by the electronic tag reader. The read electronic tag data is sent to the article sales data processing apparatus. Based on the received electronic tag data, the article sales data processing apparatus processes sales data of the relevant article.

Even if any object is interposed between the electronic tag attached to the article and antenna of the electronic tag reader in such an article sales data processing apparatus, the electromagnetic wave passes through the interposed object to allow the read operation of the electronic tag data. Therefore, it is not necessary to have the electronic tags attached to respective articles face, one by one, the antenna of the electronic tag reader, unlike a conventional technique in which a combination of a barcode and barcode reader is used. That is, simply by placing each article to which the electronic tag is attached within the communication area of the electronic tag reader, acquisition of the data concerning the article can be completed, thereby significantly increasing the efficiency of checkout operation.

Further, it is possible to read even a plurality of electronic tags at once as far as they are located within the communication area of the antenna. This allows simultaneous processing of sales data of a plurality of articles.

However, the tag data can be read repeatedly from the electronic tag located within the communication area of the antenna. Therefore, it is necessary to prevent the article sales data processing apparatus from redundantly processing the sales data of the article to which the electronic tag whose data has already been read is attached.

To this end, it is necessary to sort out the electronic tag data of the electronic tag whose data has not yet been read from the electronic tag data of the electronic tag whose data has already been read.

An article sales data processing apparatus configured to prevent duplicate reading of the data of the electronic tag attached to the same article is disclosed in Japanese Patent No. 3373860. This article sales data processing apparatus has a memory area for temporarily storing a pair of an article code and serial number obtained from the same electronic tag data. Different serial numbers are respectively allocated to articles having the same article code. Accordingly, a pair of the article code and serial number differs from one article to another.

Every time a controller of the article sales data processing apparatus receives the electronic tag data from the electronic tag reader, it determines whether the article code and serial number in the received electronic tag data have already been stored in the memory area. In the case where a pair of article code and serial number corresponding to both the article code and serial number in the received electronic tag data has already been stored in the memory area, the received electronic tag data is discarded. Otherwise, a pair of article code and serial number in the received electronic tag data is stored in the memory area.

In this manner, the article sales data processing apparatus processes sales data corresponding to one transaction based on the article codes and serial numbers stored in the memory area.

The data that have been stored in the memory area are retained until the sales data corresponding to one transaction have been processed. After completion of termination processing of one transaction, the memory area is cleared for preparation of the next transaction.

However, in the case where the condition of electronic tag is not changed between the article after payment and article before payment, the data stored in the memory area are retained until the tag-attached articles in an effective state go out of the communication area of the antenna. This prevents the sales data of the articles of another customer after payment from being processed again.

### Disclosure of Invention

In a checkout system utilizing a conventional electronic tag, there is a problem that checkout for the next customer cannot be started until articles for which payment has been made are away from the electronic tag reader by a predetermined distance so as to be situated outside the communication area of the antenna of the electronic tag reader.

In general, a cashier operates a summation key before operating a transaction termination key for settlement of a transaction so as to display the total sales amount of one transaction on a display section. This allows both a customer and cashier to easily know the amount of money the customer should pay.

However, in a checkout system utilizing a conventional electronic tag, a tag-read operation by the electronic tag reader is continued after the summation key has been operated. Therefore, there may be a case where an electronic tag data attached to an article that a customer at checkout does not intend to purchase is read by the electronic tag reader after the summation key has been operated. In this case, the content of article sales data which is based on the electronic tag data does not coincide with the total sales amount obtained at the time when the summation is operated.

An object of the present invention is to increase reliability of a checkout system utilizing an electronic tag and to increase processing efficiency in the checkout system.

An aspect of the present invention is as follows. An article sales data processing apparatus includes an electronic tag data storage section that sequentially stores a plurality of electronic tag data and an article item storage section that sequentially stores a plurality of article sales data. The article sales data processing apparatus further includes a stop instruction means for instructing the electronic tag reader to stop its read operation and a transaction termination instruction means for instructing termination of one transaction. It is determined whether the same data as electronic tag data read from an electronic tag by an electronic tag reader is stored in the electronic tag data storage section. In the case where the same data is not stored, the read electronic tag data is added to the electronic tag data storage section. In the case where the same data is stored, the read electronic tag data is not added to the electronic tag data storage section. Article sales data is acquired based on the electronic tag data added to the electronic tag data storage section and is added to the article item storage section. When a stop instruction of read operation of the electronic tag reader is issued by the stop instruction means, the read operation of the electronic tag reader is stopped. When an instruction of termination of one transaction is issued by the transaction termination instruction means, termination processing of the one transaction is performed based on article sales data stored in the article item storage section on the condition that the stop instruction of the read operation of the electronic tag reader has been issued by the stop instruction means. When the transaction termination processing is performed, the article sales data stored in the article item storage section is cleared. After the article sales data has been cleared, the read operation of the electronic tag reader is resumed.

### Brief Description of Drawings

FIG. 1 is a system configuration diagram showing an embodiment of the present invention;
FIG. 2 is a block diagram showing a main configuration of a POS terminal according to the embodiment;
FIG. 3 is a view schematically showing the area configuration of an article item buffer provided in a RAM of the POS terminal according to the embodiment;
FIG. 4 is a view schematically showing the area configuration of an electronic tag data memory provided in the RAM of the POS terminal according to the embodiment;
FIG. 5 is a flowchart showing a main procedure of control processing executed by a CPU of the POS terminal; and
FIG. 6 is a flowchart showing a main procedure of control processing executed by a CPU of the POS terminal.

### Best Mode for Carrying Out the Invention

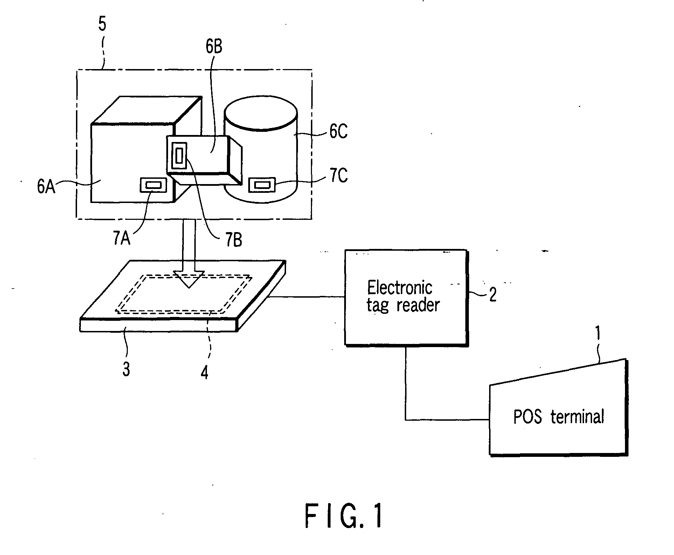

FIG. 1 is a view schematically showing an embodiment of an article sales data processing apparatus according to the present invention. This apparatus includes a POS (Point Of Sales) terminal 1, an electronic tag reader 2, and a tag antenna plate 3. An antenna 4 for transmitting and receiving an electromagnetic field or electromagnetic wave with the electronic tag is attached to the tag antenna plate 3.

The electronic tag reader 2 communicates with an electronic tag existing within the communication range of the antenna 4 in a non-contact manner to read electronic tag data stored in a memory of the electronic tag. The electronic tag reader 2 has a collision prevention function called anti-collision system. With this function, when a plurality of articles 6A, 6B, 6C, ... are placed on the tag antenna plate 3, data of electronic tags 7A, 7B, 7C, ... respectively attached to the articles 6A, 6B, 6C, ... are collectively read by the electronic tag reader 2. The articles 6A, 6B, 6C, ... may or may not be put in a container 5 such as a shopping cart.

The electronic tag data read by the electronic tag reader 2 are sequentially transmitted to the POS terminal 1. The POS terminal 1 processes the sales data of the articles 6A, 6B, 6C, ... based on the received electronic tag data.

The electronic tags 7A, 7B, 7C, ... are referred to also as wireless tags, radio-frequency identification (RFID) tags, and IC tags. In the present embodiment, the electronic tags 7A, 7B, and 7C, ... respectively attached to the articles 6A, 6B, 6C, ... are article tags. The memory of the article tag stores at least a tag-specific identification code that is recorded in each tag at the time of manufacturing of the tag and an article code that is written for identifying the article to which the article tag is attached.

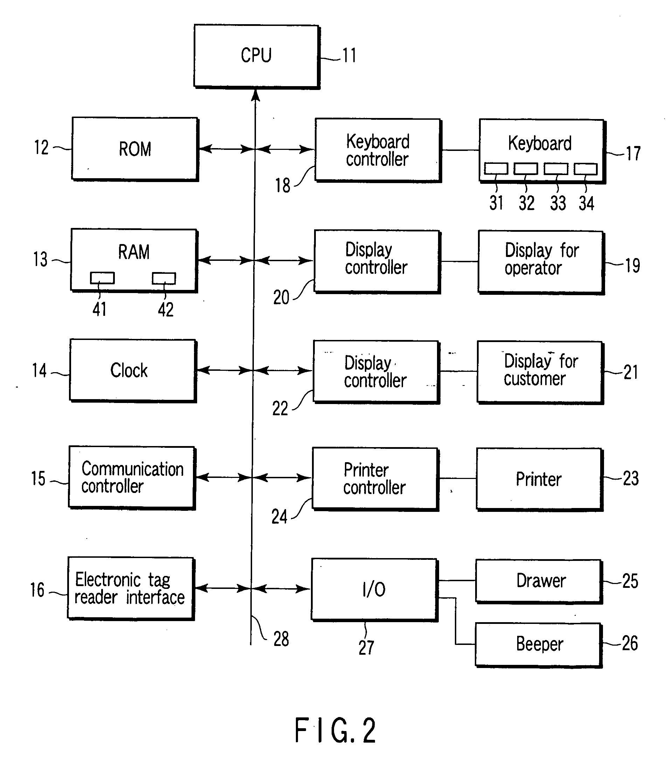

FIG. 2 is a block diagram showing a main configuration of the POS terminal 1 which is one aspect of the article sales data processing apparatus. The POS terminal 1 incorporates a central processing unit (CPU) 11 as a controller main body. In addition to the CPU 11, the POS terminal 1 includes a read-only memory (ROM) 12, a random access memory (RAM) 13, a clock 14, a communication controller 15, an electronic tag reader interface 16 to which the electronic tag reader 2 is connected, a keyboard controller 18 for controlling a keyboard 17, a first display controller 20 for controlling the screen display of a display 19 for operator, a second display controller 22 for controlling the screen display of a display 21 for customer, a printer controller 24 for controlling printing operation of a printer 23, and an input/output (I/O) port 27 for outputting drive signals to a drawer 25 and a beeper 26, respectively.

The CPU 11 connects to the ROM 12, RAM 13, clock 14, communication controller 15, electronic tag reader interface 16, I/O port 27, and controllers 18, 20, 22, 24 of the respective input/output devices through a bus line 28 such as an address bus or data bus.

Fixed data such as a program is previously stored in the ROM 12. Various memory areas for storing variable data such as input data and arithmetic processing data are formed in the RAM 13. The clock 14 provides the current date and time. A store server is connected online to the communication controller 15.

The keyboard 17 includes at least a summation key 31, a transaction termination key 32, an addition key 33, and a cancel key 34. The summation key 31 is operated when stop of reading operation of the electronic tag reader is instructed. The summation key 31 functions as a stop instruction means of the electronic tag reader. The transaction termination key 32 is operated when termination of one transaction is declared. The transaction termination key 32 functions as a termination instruction means. The addition key 33 is operated when addition of an article to be purchased by a customer is instructed. The addition key 33 functions as an addition instruction means. The cancel key 34 is operated when cancellation of an article to be purchased by a customer is instructed. The cancel key 34 functions as a cancel instruction means.

The RAM 13 includes at least an article item buffer 41, an electronic tag data memory 42, and a flag memory 43. The article item buffer 41 stores a plurality of article sales data to be processed as sales data in one transaction. The electronic tag data memory 42 stores a plurality of different electronic tag data.

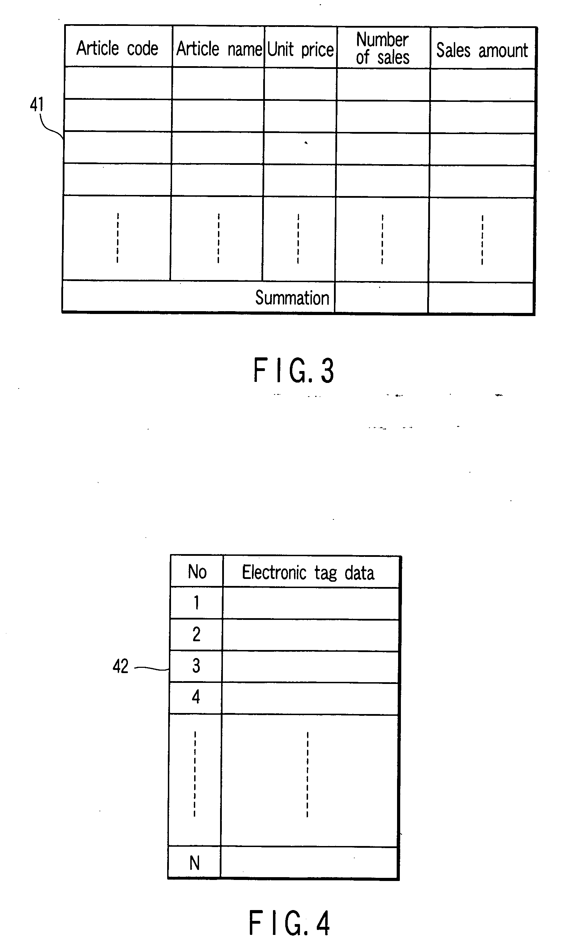

As shown in FIG. 3, the article item buffer 41 has an area for storing a plurality of article sales data each including items of article code, article name, unit price, number of sales, and sales amount, and an area for storing the summation data of the number of sales and that of the sales amount. When the transaction termination key 31 is operated, the data stored in the article item buffer 41 is regarded as the data belonging to one transaction and processed collectively.

As shown in FIG. 4, the electronic tag data memory 42 has an area for storing electronic tag data in correspondence with area numbers of constant number N (N>1). The electronic tag data memory 42 stores the electronic tag data in the areas in the ascending order starting from area number 1. After the electronic tag data are stored in the areas up to area number N, subsequent electronic tag data are overwritten in the areas starting from area number 1.

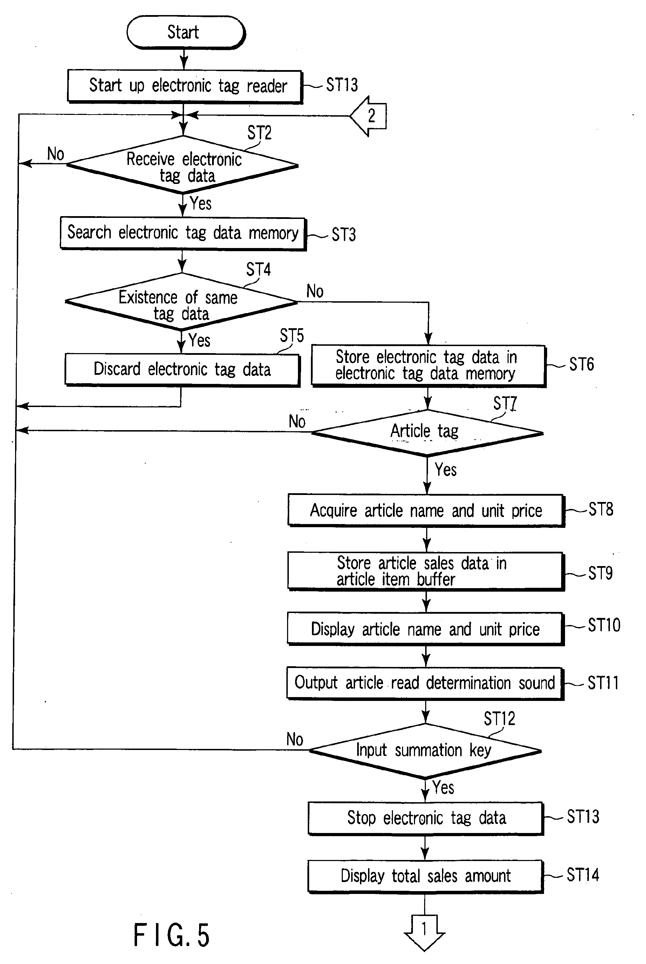

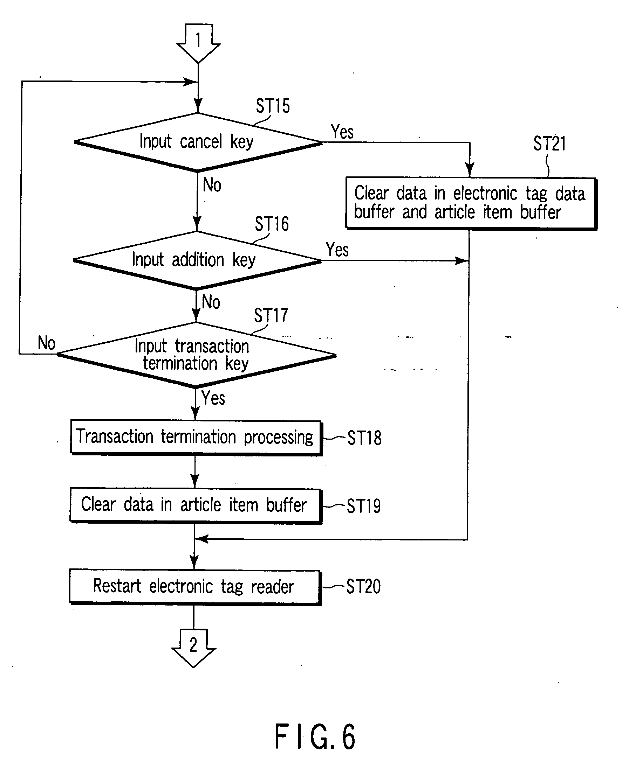

In the POS terminal 1 having the configuration described above, when a power is turned on and system is started up, the CPU 11 executes control processing according to the procedure shown in flowcharts of FIGS. 5 and 6. The CPU 11 instructs the electronic tag reader 2 to which the CPU 11 is connected through the electronic tag reader interface 16 to start up in step (ST) 1.

Upon receiving the start-up instruction, the electronic tag reader 2 modulates a read signal for reading the electronic tag and continuously transmits the modulated electromagnetic wave from the antenna 4. Then, the electronic tag reader 2 waits for the antenna 4 to receive a response signal from the electronic tag. When receiving the response signal using the antenna 4, the electronic tag reader 2 demodulates the electromagnetic wave and transmits response data, i.e., electronic tag data stored in the memory of the electronic tag to the POS terminal 1.

In ST2, the CPU 11 waits for reception of the electronic tag data. Upon receiving the electronic tag data from the electronic tag reader 2, the CPU 11 searches the electronic tag data memory 42 in ST3. In ST4, the CPU 11 determines whether the same data as the received electronic tag data exists in the electronic tag data memory 42. More specifically, the CPU 11 searches the electronic tag data memory 42 using the tag-specified ID code included in the received electronic tag data. In the case where electronic tag data including the same ID code is found as a result of the search, the CPU 11 determines existence of the same data. In the case where electronic tag data including the same ID code is not found, the CPU 11 determines absence of the same data.

When determining existence of the same data, the CPU 11 does not add the received electronic tag data to the electronic tag data memory 42 but discards it in ST5. After an appropriate time, the CPU 11 returns to ST2 and waits for reception of the next electronic tag data.

On the other hand, when determining absence of the same data, the CPU 11 adds the received electronic tag data to the electronic tag data memory 42 in ST6.

By repeating the above steps ST3, ST4, ST5, and ST6, different electronic tag data are sequentially stored in the electronic tag data memory 42.

In ST7, the CPU 11 determines whether the electronic tag data added to the electronic tag data memory 42 is data of an article tag attached to each article or not. When the electronic tag data is not data of an article tag, the CPU 11 returns to ST2 and waits for reception of the next electronic tag data.

In the case where the received electronic tag data is data including the article code together with the ID code, this data is determined to be electronic tag data that has been read from the article tag, so the CPU 11 acquires article data such as article name and unit price based on the article code included in the electronic tag data in ST8.

The POS terminal 1 has an article data file in which the article data such as the article name and unit price has been preset in correspondence with the article code of each article. Upon acquisition of the article code from the electronic tag data, the CPU 11 searches the article data file using the acquired article code. Then, the CPU 11 acquires the article data such as article name and unit price that has been set in correspondence with the article code. Note that by storing the article data such as the article name and unit price in the memory of the article tag together with the article code, it is possible to omit the article data file.

Upon acquisition of the article data such as the article code, article name, and unit price, the CPU 11 generates article sales data including the article code, article name, unit price, number of sales, and sales amount in ST9. In the article sales data, the number of sales is fixed to "1". Accordingly, the unit price directly represents the sales amount. The CPU 11 adds the article sales data to the article item buffer 41.

In ST10, the CPU 11 adds the number of sales and sales amounts of respective article sales data stored in the article item buffer 41 to calculate the total number of sales and total sales amounts (subtotal). The CPU 11 then rewrites the summation area of the article item buffer 41 and displays the article name, unit price, and the like on the display 19 for operator and display 21 for customer. Further, in ST 11, the CPU 11 sends a drive signal to the beeper 26 to cause an article read determination sound to be emitted.

The CPU 11 then determines in ST12 whether or not the summation key 31 has been operated. In the case where the summation key 31 has not been operated, the CPU 11 returns to ST2 and waits for reception of the next electronic tag data.

In the case where the summation key 31 has been operated, the CPU 11 instructs the electronic tag reader 2 to stop the reading operation in ST13. In response to the instruction, the electronic tag reader 2 stops transmission of a read signal.

In ST14, the CPU 11 displays data representing the total sales amount stored in the article item buffer 41 on the display 19 for operator and display 21 for customer.

In steps 15 to 17, the CPU 11 waits for the operation of one of the cancel key 34, addition key 33, and transaction termination key 32.

In the case where the transaction termination key 32 has been operated in ST17, the CPU 11 performs termination processing of one transaction based on the article sales data stored in the article item buffer 41 in ST18. The termination processing includes processing of calculating change upon payment for the total amount in one transaction, processing of displaying the amount of change on the display 19 for operator and display 21 for customer, and processing of automatically opening the drawer 25. In addition to the above, the termination processing includes processing of driving the printer 23 to issue a receipt on which transaction detail data stored in the article item buffer 41, such as the article name, number of sales, sales amount, total number of sales, total sales amounts, has been printed.

After completion of the termination processing, the CPU 11 clears all the article sales data in the article item buffer 41 in ST19. At this time, the CPU 11 does not clear the electronic tag data in the electronic tag data memory 42.

In ST20, the CPU 11 instructs the electronic tag reader 2 to restart. In response to the instruction, transmission of a read signal from the electronic tag reader 2 is resumed. Then, the CPU 11 returns to ST2 and waits for reception of the next electronic tag data.

In the case where the cancel key 34 is operated in ST15, the CPU 11 clears data in the electronic tag data memory 42 and article item buffer 41 in ST21. After an appropriate time, the CPU 11 instructs the electronic tag reader 2 to restart. In response to the instruction, a read signal is transmitted from the electronic tag reader 2 again. Then, the CPU 11 returns to ST2 and waits for reception of the electronic tag data.

In the case where the addition key 33 is operated in ST16, the CPU 11 instructs the electronic tag reader 2 to restart without clearing the data in the electronic tag data memory 42 and article item buffer 41. In response to the instruction, a read signal is transmitted again from the electronic tag reader 2. Then, the CPU 11 returns to ST2 and waits for reception of the electronic tag data.

As described above, in the present embodiment, when a power of the POS terminal 1 is tuned on, a read signal for reading the electronic tag is transmitted from the antenna 4 of the electronic tag reader 2.

When an electronic tag enters the communication range of the antenna 4, electronic tag data stored in the memory of the electronic tag is read by the electronic tag reader 2 in a non-contact manner and transmitted to the POS terminal 1.

Assume that a customer comes to a checkout counter on which the POS terminal 1 is installed for the purpose of purchasing three articles of 6A, 6B, 6C. In this case, a casher places the articles 6A, 6B, 6C on the tag antenna plate 3. Then, electronic tags 7A, 7B, 7C attached to the articles 6A, 6B, 6C transmit response signals carrying the electronic tag data each including ID code and article code in response to a read signal from the antenna 4.

Assume that the response signal from the electronic tag 7A attached to the article 6A has been received by the antenna 4. Then, the electronic tag data including the ID code and article code stored in the electronic tag 7A is read by the electronic tag reader and transmitted to the POS terminal 1.

Then, the POS terminal 1 determines whether or not electronic tag data including the ID code in the received electronic tag data has been stored in the electronic tag data memory 42. It is determined to be "No" in this case, so that this electronic tag data is added to the electronic tag data memory 42. Further, based on the article code in the electronic tag data, the article name and unit price of the article A are acquired and article sales data is then generated. The generated article sales data is stored in the article item buffer 41. Note that data in the article item buffer 41 has been cleared after the transaction termination processing of an immediately preceding customer.

Next, assume that the response signal from the electronic tag 7B attached to the article 6B is received by the antenna 4. In this case, the electronic tag data including the ID code and article code stored in the electronic tag 7B is read by the electronic tag reader and transmitted to the POS terminal 1.

The POS terminal 1 then determines whether or not electronic tag data including the ID code in the received electronic tag data has been stored in the electronic tag data memory 42. It is determined to be "No" also in this case, so that this electronic tag data is added to the electronic tag data memory 42. Further, based on the article code in the electronic tag data, the article name and unit price of the article B are acquired and article sales data is then generated. The generated article sales data is stored in the article item buffer 41.

The same processing is performed in the case where a response signal from the electronic tags 7C attached to the articles 6C is received by the antenna 4.

Note that in the case where the response signal from the electronic tag 7B is received again before the response signal from the electronic tag 7C is received, the electronic tag data of the electronic tag 7B is discarded since the ID code stored in the electronic tag 7B has already been stored in the electronic tag data memory 42.

Thereafter, the cashier operates the summation key 31 to display the total sales amount of the article sales data stored in the article item buffer 41 on the display 19 for operator and display 21 for customer. The customer can know the payment from the content of the display 21 for customer. The cashier can know the amount of money the customer should pay from the content of the display 19 for operator.

At this time, a read signal transmitted from the antenna 4 of the electronic tag reader 2 is stopped. Therefore, even if a new article, e.g., an article of the next customer is placed within the communication range of the antenna 4, the data of the electronic tag attached to the new article is not read. That is, a transaction with the present customer is settled.

Thereafter, when the customer pays the charge and cashier operates the transaction termination key 32, transaction termination processing is performed based on the respective article sales data of articles 6A, 6B, 6C stored in the article item buffer 41. After completion of the transaction termination processing, the data in the article item buffer 41 is cleared. At the same time, transmission of a read signal from the antenna 4 of the electronic tag reader 2 is resumed. This enables checkout for the next customer.

However, at this time, data in the electronic tag data memory 42 is not cleared. This means that the electronic tag data of the electronic tags 7A, 7B, 7C attached to the articles 6A, 6B, 6C are kept remained in the electronic tag data memory 42. Therefore, even if the purchased article of an immediately preceding customer is situated near the electronic tag reader 2 and therefore the data of the electronic tag attached to the purchased article is read again, the read electronic tag data is not added to the electronic tag data memory 42.

Naturally, the article sales data of the articles 6A, 6B, 6C to which the electronic tags 7A, 78, 7C whose data have been stored in the electronic tag data memory 42 are attached are not stored in the article item buffer 41.

That is, reregistration of the purchased article of an immediately preceding customer is inhibited by a duplicate reading prevention function using the data of the electronic tag data memory 42. Therefore, checkout for the next customer can smoothly be performed. Further, it is possible to eliminate the need to provide a special technical means for determining whether or not the article after payment is situated apart from the electronic tag reader by a predetermined distance, thereby realizing the system according to the present invention at low cost.

There may be a case where a customer requests an additional purchase of an article after a cashier operates the summation key 31. In such a case, the cashier places the article to be added on the tag antenna plate 3 and operates the addition key 33.

Then, transmission of a read signal from the antenna 4 of the electronic tag reader 2 is resumed. At this time, the data in the electronic tag data memory 42 and article item buffer 41 are not cleared. Therefore, only the electronic tag data attached to the article placed on the tag antenna plate 3 is added to the electronic tag data memory 42.

Further, based on the electronic tag data, the article name and unit price of the article are acquired and article sales data is then generated. The generated article sales data is stored in the article item buffer 41. Thereafter, when the cashier operates the summation key 31, the total sales amount including the newly added article is displayed on the display 19 for operator and display 21 for customer.

As described above, according to the present embodiment, even if the customer requests an additional purchase of an article after the transaction has been settled by the operation of the summation key 31, all the cashier has to do is to place the article to be added on the tag antenna plate 3 and operate the addition key 33.

Further, there may be a case where a customer requests return of a part of the purchased articles after a cashier operates the summation key 31. In this case, a cashier operates the cancel key 34 after removing the article to be returned from the tag antenna plate 3.

Then, all the data in the electronic tag data memory 42 and article item buffer 41 are cleared and, at the same time, transmission of a read signal from the antenna 4 of the electronic tag reader 2 is resumed. Thus, the electronic tag data of the electronic tags attached to the articles remaining on the tag antenna plate 3, i.e., articles actually purchased by the customer are stored once again in the electronic tag data memory 42. Further, the article sales data generated based on the electronic tag data are stored in the article item buffer 41 once again.

Subsequently, when the cashier operates the summation key 31, the total sales amount of the article sales data stored in the article item buffer 41 is displayed on the display 19 for operator and display 21 for customer. That is, the total sales amount of the purchased article (excluding the returned article) is displayed.

Further, there may be a case where a customer requests return of all the purchased articles after a cashier operates the summation key 31. In such a case, a cashier operates the cancel key 34 after removing all the articles from the tag antenna plate 3. Then, the data in the electronic tag data memory 42 and article item buffer 41 are cleared and, at the same time, transmission of a read signal from the antenna 4 of the electronic tag reader 2 is resumed. Therefore, checkout for the next customer can smoothly be performed.

As described above, according to the present embodiment, even if the customer requests return of an article after the transaction has been settled by the operation of the summation key 31, all the cashier has to do is to remove the article to be returned from the tag antenna plate 3 and operate the cancel key 34.

In the above embodiment, electronic tag data memory 42 is searched using the tag-specified ID code included in the received electronic tag data to thereby determine presence/absence of the electronic tag data including the same ID code. On the other hand, there is a case where a third tag that does not store the tag-specified ID code but stores a pair of the article name and serial number is attached to each article. In order to cope with such a case, it is only necessary to use the article code and serial number in place of the tag-specified ID code. In this case, a pair of the article code and serial number included in the electronic tag data received by the electronic tag reader 2 is stored in the electronic tag data memory 42, and the electronic tag data memory 42 is searched to determine presence/absence of the electronic tag data including the same article code and serial number.

Further, in the above embodiment, an article tag storing the article code in addition to the tag-specified ID code is attached to each article, and sales data of each article is acquired from an article data file in which article data such as article name and unit price has been preset in correspondence with the article code stored in each article tag. On the other hand, there is a case where an RFID tag capable of reading only the tag-specified ID code is attached to each article. In such a case, an article data file in which article data such as article code, article name, and unit price has been preset in correspondence with the tag-specified ID code is prepared, and sales data of each article is acquired from this file based on the ID code.

Further, in the above embodiment, the stop and resumption of the read operation of the electronic tag reader are achieved by the stop and resumption of the transmission of a read signal. Alternatively, however, as the stop and resumption of the read operation, the electronic tag reader that has received electronic tag data from an electronic tag may stop transmission of the received electronic tag data to the pos terminal and, after that, resume the transmission.

Further, in the above embodiment, the operation of the summation key 31 serves as a trigger for stopping the operation of the electronic tag reader. However, in the case of a POS terminal of a type that inputs the customer type utilizing a customer type key before operating the transaction termination key 32, the operation of the customer type key may serve as a trigger for stopping the operation of the electronic tag reader. Further, an operation means other than a key may be used as a trigger for stopping the operation of the electronic tag reader.

Although the transaction termination key 32, addition key 33, and cancel key 34 are used respectively as the transaction instruction means, addition instruction means, and cancel instruction means, it goes without saying that an operation means other than a key may be used as the above means.

### Industrial Applicability

The present invention can suitably be applied to a system using an electronic tag attached to each article to perform checkout of articles that a customer purchase based on data stored in the electronic tag.

## Claims

1. An article sales data processing apparatus having an electronic tag reader for reading data stored in an electronic tag and, based on electronic tag data read from the electronic tag using the electronic tag reader, processing sales data of an article to which the electronic tag is attached, **characterized by** comprising:
an electronic tag data storage section that sequentially stores a plurality of electronic tag data;
an article item storage section that sequentially stores a plurality of article sales data;
determination means for determining whether the same data as electronic tag data read from the electronic tag using the electronic tag reader is stored in the electronic tag data storage section;
electronic tag data processing means for adding the electronic tag data read from the electronic tag to the electronic tag data storage section in the case where the determination means determines that the same data is not stored, while not adding the electronic tag data read from the electronic tag to the electronic tag data storage section in the case where the determination means determines that the same data is stored;
article sales data addition means for acquiring article sales data based on the electronic tag data added to the electronic tag data storage section so as to add the acquired article sales data to the article item storage section;
stop instruction means for instructing the electronic tag reader to stop its read operation;
stop control means for stopping read operation of the electronic tag reader when the stop instruction means issues the read operation stop instruction;
transaction termination instruction means for instructing termination of one transaction;
transaction termination processing means for performing termination of one transaction based on the article sales data stored in the article item storage section when the instruction of termination of the one transaction is issued by the transaction termination instruction means on the condition that the stop instruction means has issued the stop instruction of the read operation of the electronic tag reader;
article sales data clear means for clearing the article sales data stored in the article item storage section when the termination processing is performed by the transaction termination processing means; and
first resumption control means for resuming the read operation of the electronic tag reader after the article sales data has been cleared by the article sales data clear means.

2. The article sales data processing apparatus according to claim 1, **characterized by** further comprising:
addition instruction means for instructing addition of an article to be purchased; and
second resumption control means for resuming the read operation of the electronic tag reader when the instruction of addition of an article to be purchased is issued by the addition instruction means after the stop instruction means has issued the stop instruction of the read operation of the electronic tag reader.

3. The article sales data processing apparatus according to claim 1 or 2, **characterized by** further comprising:
cancel instruction means for instructing cancellation of an article to be purchased;
data clear means for clearing data in the electronic tag data storage section and article item storage section when the instruction of cancellation of an article to be purchased is issued by the cancel instruction means after the stop instruction means has issued the stop instruction of the read operation of the electronic tag reader; and
third resumption control means for resuming the read operation of the electronic tag reader after the data has been cleared by the data clear means.
